# EUROPÄISCHE PATENTSCHRIFT

(11) **EP 2 719 473 B1**
(45) Veröffentlichungstag und Bekanntmachung des Hinweises auf die Patenterteilung: **24.08.2016**
(21) Anmeldenummer: 12189903.3
(22) Anmeldetag: 25.10.2012
(51) Int. Cl.: B21B 35/14

(54) **Kreuzgelenkanordnung**
Universal joint arrangement
Ensemble de joint universel

(30) Priorität: 05.10.2012 DE 102012109475
(43) Veröffentlichungstag der Anmeldung: 16.04.2014
(73) Patentinhaber: Spicer Gelenkwellenbau GmbH, 45143 Essen (DE)
(72) Erfinder: Erlmann, Nikolaus Martin, 40213 Düsseldorf (DE); Hajrula, Dashmir, 45326 Essen (DE); Schürenberg, Martin, 45276 Essen (DE)
(74) Vertreter: Müller, Thomas Michael

(56) Entgegenhaltungen:
- DE-C2- 3 446 495
- DE-U- 1 858 494
- US-B1- 6 319 131

## Beschreibung

Die Erfindung betrifft eine Kreuzgelenkanordnung mit zwei Gelenkgabeln und vier Zapfenlageranordnungen, wobei die Zapfenlageranordnungen jeweils einen von einer Zapfenkreuzmitte vorstehenden Zapfen umfassen. Ein Gabelarm einer der Gelenkgabeln weist eine Lagerbohrung auf, in der der Zapfen gelagert ist. Eine Außenhülse ist innerhalb der Lagerbohrung angeordnet und weist an einer der Zapfenkreuzmitte zugewandten Seite eine Stirnfläche auf. Eine Innenhülse, die innerhalb der Lagerbohrung angeordnet ist, weist an einer der Zapfenkreuzmitte zugewandten Seite einen Ringabschnitt auf. Ferner ist ein Axiallager vorgesehen, das zwischen der Stirnfläche der Außenhülse und dem Ringabschnitt der Innenhülse angeordnet ist, wobei die Außenhülse an einer der Zapfenmitte zugewandten Seite der Lagerbohrung axial gegen den Gabelarm abgestützt ist. Eine solche Kreuzgelenkanordnung zeigt DE18 58 494 U, wobei die Innenhülse an den jeweiligen Zapfengrund in Richtung zur Zapfenkreuzmitte axial abgestützt ist. Der Oberbegriff des Anspruchs 1 basiert auf der DE 18 58 494 U.

Eine weitere Kreuzgelenkanordnung ist aus der DE 34 46 495 C2 bekannt. Dort wird beschrieben, dass insbesondere beim Einsatz im Schwermaschinenbau, z.B. in Walzwerken, Gelenkwellen hohen Drehmomenten und Drehmomentschwankungen, vor allem auch stoßartigen Beanspruchungen und Querbeschleunigungen bei großen und sich rasch verändernden Beugewinkeln, unterliegen. Es kommt unter Last zu elastischen Verformungen der Gelenkgabel. Hierbei werden unter anderem die Lagerbohrungen, welche die Radiallager zum Lagern der Zapfen des Zapfenkreuzes aufnehmen, verformt. Die Lagerbohrungen können sich weiten und dabei unrunde Formen annehmen. Diese Verformungen haben einen Einfluss auf die Lagerungen. Infolgedessen kann es zu Ausfällen von Lagern kommen. Insbesondere dann, wenn ein Axiallager an der Zapfenwurzel des Zapfenkreuzes, also radial innerhalb des Radiallagers angeordnet ist und direkt auf einer entsprechenden Fläche am Zapfengrund aufliegt, ergeben sich infolge einer Verbiegung des Zapfens unter Last Fluchtungsfehler zwischen Radial- und Axiallager mit entsprechenden Kantenpressungen und örtlichem Abheben der Rollen im Axiallager. Dabei nehmen die Axiallagerringe an der Zapfenverformung nicht teil und können sich nicht in die Lage bewegen, die eine günstige Lastverteilung auf die Rollen gewährleistet. Die Folge ist ein Ausfall des Lagers lange vor der rechnerisch ermittelten Lebensdauer.

Um dies zu vermeiden, schlägt DE 34 46 495 C2 vor, dass die Innenhülse des Radialwälzlagers bis zu einem als Bund ausgebildeten Anschlag auf dem Ende des Zapfens aufgesetzt ist. Im radial inneren Bereich ist die Innenhülse mit einem weiteren Bund versehen, der als Laufbahn für die Rollen des Axiallagers ausgebildet ist. Das Zapfenkreuz ist somit nicht der unmittelbare Träger für das Axiallager. Die an der Zapfenwurzel, also dem Übergangsbereich zwischen zwei Zapfen, auftretende maximale Verformung ist nicht mit einer unmittelbaren Verlagerung beziehungsweise Kippung des Axiallagerringes verbunden. Vielmehr kann ein Ausgleich der Verformung auch durch den Bund an der Innenhülse erfolgen.

Die Außenhülse ist hierbei derart gestaltet, dass sie von radial außen in die Lagerbohrung eingesetzt wird und mittels eines Sprengrings innerhalb der Lagerbohrung gesichert wird. Diese Sicherung des Außenrings radial außen in der Lagerbohrung hat jedoch zur Folge, dass der Außenrotationsdurchmesser der Kreuzgelenkanordnung derart groß vorgesehen sein muss, dass Platz für den Sprengring ist.

Aufgabe der vorliegenden Erfindung ist es, bei einer eingangs genannten Kreuzgelenkanordnung einen möglichst geringen Außenrotationsdurchmesser zu erzielen, wobei eine möglichst gute Abstützung des Axiallagers realisiert wird.

Die Aufgabe wird durch eine Kreuzgelenkanordnung mit zwei Gelenkgabeln und vier Zapfenlageranordnungen gelöst, wobei die Zapfenlageranordnungen jeweils folgendes umfassen:
einen von einer Zapfenkreuzmitte entlang einer Zapfenachse vorstehenden Zapfen,
einen Gabelarm einer der Gelenkgabeln mit einer Lagerbohrung, in der der Zapfen gelagert ist,
eine Außenhülse, die innerhalb der Lagerbohrung angeordnet ist und die an einer der Zapfenkreuzmitte zugewandten Seite eine Stirnfläche aufweist,
eine Innenhülse, die innerhalb der Lagerbohrung angeordnet ist und die an einer der Zapfenkreuzmitte zugewandten Seite einen Ringabschnitt aufweist, und
ein Axiallager, das zwischen der Stirnfläche der Außenhülse und dem Ringabschnitt der Innenhülse angeordnet ist, und das Wälzkörper aufweist,
wobei die Außenhülse an einer der Zapfenmitte zugewandten Seite der Lagerbohrung axial gegen den Gabelarm abgestützt ist, wobei zwischen dem Ringabschnitt der Innenhülse und dem Zapfenkreuz ein Spalt vorgesehen ist, und wobei die Wälzkörper des Axiallagers derart angeordnet sind, dass sich in Richtung parallel zur Zapfenachse eine Überdeckung der Wälzkörper mit dem Gabelarm ergibt.

Der Spalt zwischen dem Ringabschnitt der Innenhülse und dem Zapfenkreuz gewährleistet, dass der Ringabschnitt zumindest bis zu einem gewissen Grad einer Belastung verformbar ist, ohne sich gegen das Zapfenkreuz abzustützen.

Vorteil bei dieser Lösung ist, dass die Außenhülse, bezogen auf die Drehachse der Kreuzgelenkanordnung, radial innen gegen den Gabelarm abgestützt ist. Es ist somit keine Sicherung radial außen erforderlich, die den Außenrotationsdurchmesser beeinflussen würde. Der Außenrotationsdurchmesser ist daher verglichen zur Lösung des oben beschriebenen Standes der Technik geringer.

Ferner ergibt sich eine bessere Abstützung der Axialkräfte, bezogen auf die Längsachse des Zapfens, die von dem Axiallager übertragen werden, da die Axialkräfte über einen kurzen Weg von der Außenhülse zum Gabelarm weitergeleitet werden.

Hierzu ist es vorteilhaft, wenn die Außenhülson jeweils einen Flanschabschnitt aufweisen, mit dem die Außenhülsen an der der Zapfenkreuzmitte zugewandten Seite der Lagerbohrung axial gegen den Gabelarm abgestützt sind.

Der Flanschabschnitt kann innerhalb eines Bohrungsabschnitts mit gegenüber der Lagerbohrung erweitertem Innendurchmesser angeordnet sein, wobei sich der Bohrungsabschnitt an der der Zapfenkreuzmitte zugewandten Seite der Lagerbohrung an diese anschließt.

Die Außenhülsen sind jeweils derart gestaltet, dass sie ausgehend vom Flanschabschnitt einen Hülsenabschnitt aufweisen, dessen Außendurchmesser an den Innendurchmesser der jeweiligen Lagerbohrung angepasst ist. Hierbei sind innerhalb des Hülsenabschnitts Wälzkörper eines Radiallagers angeordnet.

Der Ringabschnitt kann an einem hülsenförmigen Ausgleichsabschnitt der Innenhülse angeordnet sein, wobei zwischen dem Ausgleichsabschnitt und dem Zapfenkreuz ein Spalt vorgesehen ist. Dies erhöht die Verformbarkeit der Innenhülse in diesem Bereich.

Der Ringabschnitt kann einen zu einer Zapfenschulter im Übergang vom Zapfen zur Zapfenkreuzmitte hin gerichteten umlaufenden Bund aufweisen. Dieser dient als Anschlag für den Fall, dass die Belastung einen bestimmten Wert übersteigt. Dann stützt sich der Ringabschnitt über den Bund gegen das Zapfenkreuz ab, so dass ein Bruch der Innenhülse oder ein Ausfall des Axiallagers aufgrund einer Überbelastung vermieden wird. Selbstverständlich kann sich der Ringabschnitt auch unmittelbar bei einer Überlastung am Zapfenkreuz abstützen, ohne dass ein Bund vorgesehen ist.

Die Innenhülsen sind axial in Richtung zur Zapfenkreuzmitte jeweils an einem Zapfenende des Zapfens, das der Zapfenkreuzmitte abgewandt ist, abgestützt. Hierzu kann ein Anlagebund vorgesehen sein, der radial zur Zapfenachse nach innen vom Hülsenabschnitt vorsteht.

Bei einer bevorzugten Ausführungsform ist vorgesehen, dass die Axiallager jeweils zumindest teilweise außerhalb eines Durchmessers der jeweiligen Lagerbohrung angeordnet sind. Somit ergibt sich zumindest teilweise eine axiale Einleitung der Kräfte vom Axiallager auf die Gelenkgabel.

Je Zapfen kann eine Dichtungsanordnung mit einem inneren Ring und einem äußeren Ring vorgesehen sein. Der inneren Ring ist an dem Zapfenkreuz und der äußere Ring an der Außenhülse befestigt. Zwischen dem inneren Ring und dem äußeren Ring kann eine Dichtung, vorzugsweise eine Labyrinthdichtung und/oder ein Wellendichtring, vorgesehen sein.

Darüber hinaus kann zwischen dem inneren Ring und der Innenhülse eine Dichtung, vorzugsweise ein O-Ring, vorgesehen sein.

Zur weiteren Abdichtung kann zwischen dem äußeren Ring und der Innenhülse eine Dichtung, vorzugsweise ein Wellendichtring, vorgesehen sein.

Bevorzugte Ausführungsbeispiele werden im folgenden anhand der Zeichnungen näher erläutert. Hierin zeigen
- Figur 1: einen Halblängsschnitt einer Kreuzgelenkwelle,
- Figur 2: einen Ausschnitt einer ersten Ausführungsform einer Zapfenkreuzgarnitur mit Kreuzgelenkanordnung im Querschnitt,
- Figur 3: einen Ausschnitt einer zweiten Ausführungsform einer Zapfenkreuzgarnitur mit Kreuzgelenkanordnung im Querschnitt und
- Figur 4: einen Ausschnitt einer dritten Ausführungsform einer Zapfenkreuzgarnitur mit Kreuzgelenkanordnung im Querschnitt.

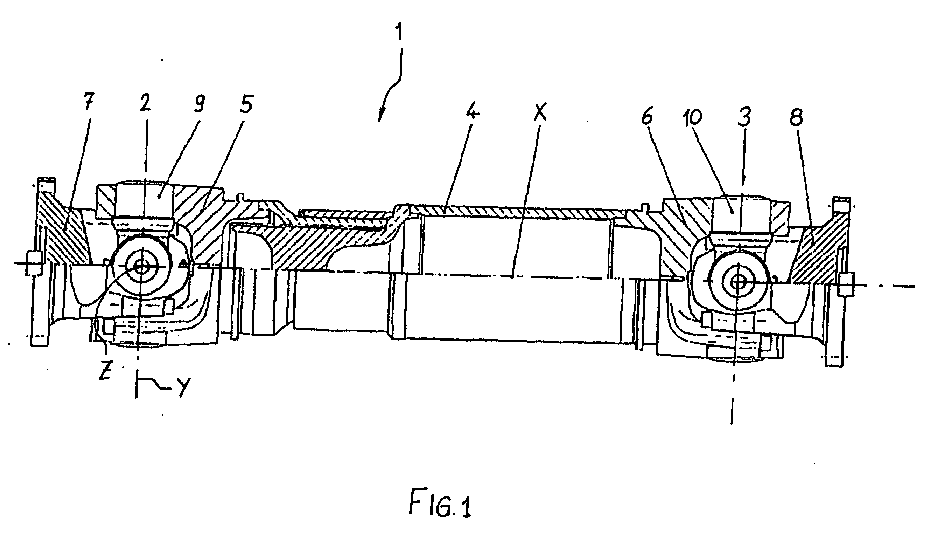

Aus Figur 1 ist eine Kreuzgelenkwelle 1 ersichtlich, welche zwei Kreuzgelenke 2, 3 sowie eine die beiden Kreuzgelenke 2, 3 verbindende und eine Veränderung des Abstandes zwischen den beiden Kreuzgelenken 2, 3 zulassende Welle 4 besitzt. Die beiden Kreuzgelenke 2, 3 sind auf einer Drehachse X zentriert ausgerichtet. Jedes von ihnen umfasst eine erste Gelenkgabel 5, 6, die jeweils mit der Welle 4 fest verbunden ist, und eine zweite Gelenkgabel 7, 8, die jeweils mit einer der ersten Gelenkgabeln 5, 6 verbunden ist. Hierbei sind die ersten Gelenkgabeln 5, 6 jeweils mit einer der zweiten Gelenkgabeln 7, 8 über eine Zapfenkreuzgarnitur 9, 10 schwenkbar verbunden. Die Zapfenkreuzgarnituren 9, 10 weisen vier paarweise auf Zapfenachsen Y, Z zentrierte Zapfen auf.

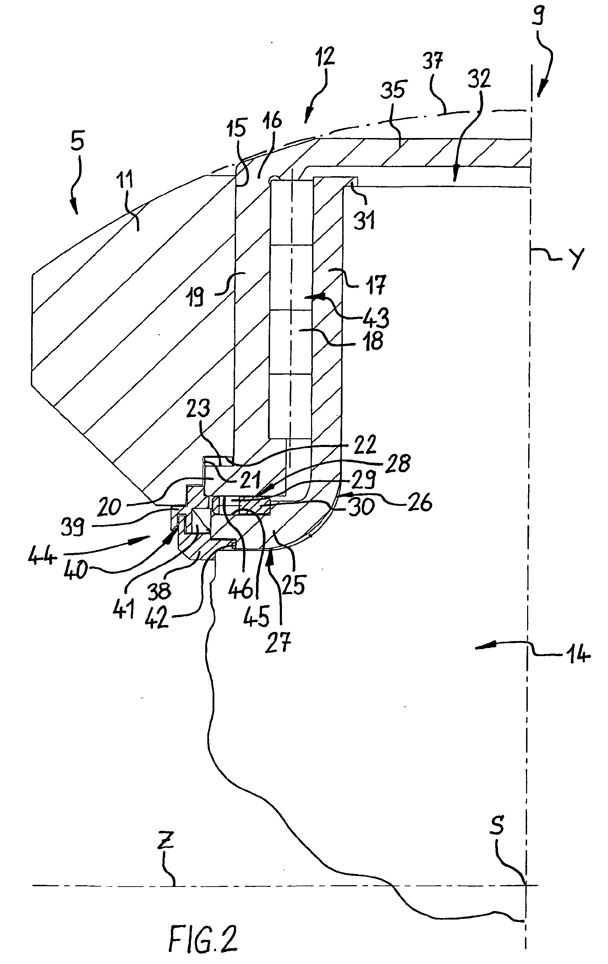

Figur 2 zeigt einen vergrößert dargestellten Teilquerschnitt durch die Zapfenkreuzgarnitur 9 gemäß Figur 1 in der Ebene, die durch die Zapfenachsen Y, Z aufgespannt wird. Die erste Gelenkgabel 5 weist einen Gabelarm 11 auf, in dem über eine Zapfenlageranordnung 12 ein Zapfen 13 eines Zapfenkreuzes 14 der Zapfenkreuzgarnitur 9 gelagert ist. Der Zapfen 13 ist hierbei um seine Zapfenachse Y drehbar aufgenommen. Hierzu weist der Gabelarm 11 eine Lagerbohrung 15 auf, die sich in Richtung der Zapfenachse Y erstreckt. In der Lagerbohrung 15 sitzt eine Außenhülse 16. Auf dem Zapfen 13 sitzt eine Innenhülse 17, wobei zwischen der Außenhülse 16 und der Innenhülse 17 umfangsverteilt Wälzkörper 18 angeordnet sind, so dass ein Radiallager 43 zur Lagerung des Zapfens 13 gebildet ist.

Die Außenhülse 16 umfasst einen Hülsenabschnitt 19, dessen Außendurchmesser an den Innendurchmesser der Lagerbohrung 15 angepasst ist und mit dem die Außenhülse 16 in der Lagerbohrung 15 angeordnet ist. In Richtung zur Zapfenkreuzmitte, welche sich in der in Figur 1 dargestellten Ansicht unten befindet und durch den Schnittpunkt S der beiden Zapfenachsen Y, Z dargestellt ist, weist die Außenhülse 16 einen Flanschabschnitt 20 auf, der radial nach außen von dem Hülsenabschnitt 19 vorsteht. Der Flanschabschnitt 20 ist innerhalb eines Bohrungsabschnitts 21 angeordnet, der sich an die Lagerbohrung 15 anschließt und gegenüber dieser einen erweiterten Innendurchmesser aufweist. Zwischen der Lagerbohrung 15 und dem Bohrungsabschnitt 21 ist eine Schulter mit einer Schulterfläche 22 gebildet, gegen welche sich der Flanschabschnitt 20 mit einer Stützfläche 23 abstützt. Die Abstützung erfolgt bezogen auf die Drehachse X in Richtung der Zapfenachse Y nach radial außen.

Die Innenhülse 17 weist in Richtung zur Zapfenkreuzmitte S einen Ausgleichsabschnitt 24 auf, der in einen radial zur Zapfenachse Y nach außen vorstehenden Ringabschnitt 25 übergeht. Der Ausgleichsabschnitt 24 ist beabstandet zum Zapfen 13 angeordnet, so dass sich ein umlaufender Spalt 26 ergibt. Der Ringabschnitt 25 ist ebenfalls beabstandet zum Zapfenkreuz 14 angeordnet, so dass sich zwischen dem Zapfenkreuz 14 und dem Ringabschnitt 25 ein Spalt 27 bildet. Zwischen dem Ringabschnitt 25 und dem Flanschabschnitt 20 ist ein Axiallager 28 vorgesehen, welches Wälzkörper 29 umfasst, die in einem Käfig 30 gehalten sind. Die Wälzkörper 29 stützen sich einerseits gegen eine Lagerfläche 45 des Ringabschnitts 25 und andererseits gegen eine Stirnfläche 46 des Flanschabschnitts 20 ab, so dass Kräfte in axialer Richtung bezogen auf die Zapfenachse Y zwischen der Außenhülse 16 und der Innenhülse 17 übertragen werden können. Dadurch, dass der Ausgleichsabschnitt 24 und der Ringabschnitt 25 mit einem Spalt 26, 27 zum Zapfen 13 bzw. zum Zapfenkreuz 14 angeordnet sind, kann der Ringabschnitt 25 bei Belastung des Zapfens 13, wodurch er in der gezeigten Bildebene seitlich verformt wird, Ausgleichsverformungen zulassen, so dass eine Überlastung des Axiallagers 28 vermieden wird.

Die Wälzkörper 29 des Axiallagers 28 sind, bezogen auf die Zapfenachse Y, weiter radial außen angeordnet, so dass sich in einer Richtung parallel zur Zapfenachse Y eine Überdeckung der Wälzkörper 29 mit der Schulter bzw. der Schulterfläche 22 im Übergang zwischen der Lagerbohrung 15 und dem Bohrungsabschnitt 21 ergibt. Axialkräfte können somit in axialer Richtung günstig vom Axiallager 28 in den Gabelarm 11 übertragen werden.

Zur axialen Sicherung entlang der Zapfenachse Y in Richtung zur Zapfenmitte S weist die Innenhülse 17 einen, bezogen auf die Zapfenachse Y, radial nach innen vorstehenden Anlagebund 31 auf, der sich gegen ein von der Zapfenkreuzmitte S abgewandten Zapfenende 32 abstützt.

Die Außenhülse 16 weist an einem der Zapfenkreuzmitte S abgewandten Ende einen Deckelabschnitt 35 auf, so dass nach radial außen hin, bezogen auf die Drehachse X, die Lagerbohrung 15 verschlossen ist.

Zur Abdichtung der Zapfenlageranordnung 12 ist eine Dichtungsanordnung 44 mit einem inneren Ring 38 und einem äußeren Ring 39 vorgesehen. Der innere Ring 38 sitzt auf dem Zapfenkreuz 14. Der äußere Ring 39 sitzt an dem Gabelarm 11. Zwischen den beiden Ringen 38, 39 ist eine Abdichtung in Form einer Labyrinthdichtung 40 vorgesehen. An dem äußeren Ring 39 sitzt ein Wellendichtring 41, der in dichtender Anlage zum Ringabschnitt 25 der Innenhülse 17 ist. Ferner sitzt am inneren Ring 38 ein Dichtring 42, der ebenfalls in dichtender Anlage zum Ringabschnitt 25 der Innenhülse 17 ist. Im vorliegenden Beispiel ist der Dichtring 42 als O-Ring gestaltet, der, bezogen auf die Zapfenachse Y, radial in Anlage zum Ringabschnitt 25 ist. Alternativ kann auch vorgesehen sein, dass der Dichtring 42 als Wellendichtring gestaltet ist, der, bezogen auf die Zapfenachse Y, axial in Anlage zum Ringabschnitt 25 ist.

Angedeutet durch eine strichpunktierte Linie ist der Rotationsumfang 37 zu erkennen, der die maximale äußere Umfangsfläche angibt, wenn sich die Kreuzgelenkwelle um die Drehachse X dreht. Es ist zu erkennen, dass sich, aufgrund der axialen Abstützung der Außenhülse 16 an der bezogen auf die Drehachse X radial inneren Seite der Lagerbohrung 15, ein geringer Rotationsdurchmesser ergibt, da an der Außenseite keine weiteren Vorkehrungen zur axialen Sicherung der Außenhülse 16 erforderlich sind.

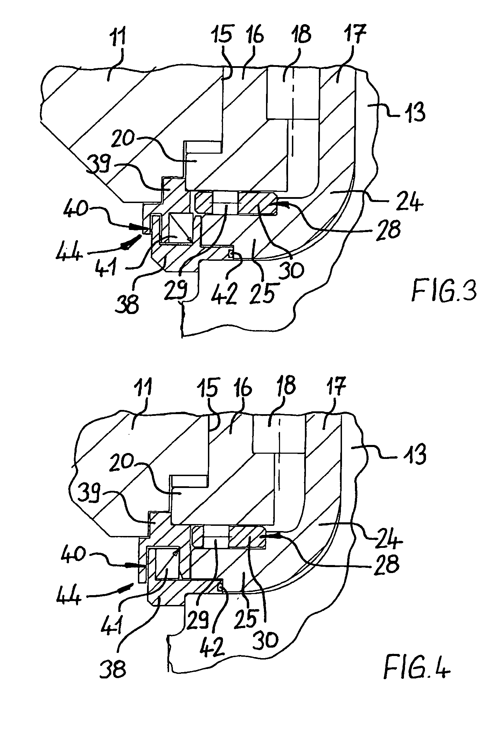

Figur 3 bis 4 zeigen alternative Ausführungsformen einer Zapfenlageranordnung, wobei übereinstimmende Bauteile mit denselben Bezugszeichen wie in Figur 2 versehen sind.

Bei der Ausführungsform gemäß Figur 3 dichtet der erste Wellendichtring 41 zwischen dem äußeren Ring 39 und dem inneren Ring 38 ab. Im weiteren ist die Abdichtungsanordnung vergleichbar zu der Ausführungsform gemäß Figur 3.

Bei der Ausführungsform gemäß Figur 4 sitzt der erste Wellendichtring 41 am inneren Ring 28 und dichtet gegenüber dem äußeren Ring 39 ab.

### Bezugszeichenliste

- 1: Kreuzgelenkwelle
- 2: Kreuzgelenk
- 3: Kreuzgelenk
- 4: Welle
- 5: erste Gelenkgabel
- 6: erste Gelenkgabel
- 7: zweite Gelenkgabel
- 8: zweite Gelenkgabel
- 9: Zapfenkreuzgarnitur
- 10: Zapfenkreuzgarnitur
- 11: Gabelarm
- 12: Zapfenlageranordnung
- 13: Zapfen
- 14: Zapfenkreuz
- 15: Lagerbohrung
- 16: Außenhülse
- 17: Innenhülse
- 18: Wälzkörper
- 19: Hülsenabschnitt
- 20: Flanschabschnitt
- 21: Bohrungsabschnitt
- 22: Schulterfläche
- 23: Stützfläche
- 24: Ausgleichsabschnitt
- 25: Ringabschnitt
- 26: Spalt
- 27: Spalt
- 28: Axiallager
- 29: Wälzkörper
- 30: Käfig
- 31: Anlagebund
- 32: Zapfenende

- 35: Deckelabschnitt

- 37: Rotationsumfang
- 38: innerer Ring
- 39: äußerer Ring
- 40: Labyrinthdichtung
- 41: Wellendichtring
- 42: Dichtring
- 43: Radiallager
- 44: Dichtungsanordnung
- 45: Lagerfläche
- 46: Stirnfläche

- X: Drehachse
- Y: Zapfenachse
- Z: Zapfenachse
- S: Schnittpunkt / Zapfenkranzmitte

## Patentansprüche

1. Kreuzgelenkanordnung mit zwei Gelenkgabeln (5, 6) und vier Zapfenlageranordnungen (12), wobei die Zapfenlageranordnungen (12) jeweils folgendes umfassen:
einen von einer Zapfenkreuzmitte (S) entlang einer Zapfenachse (Y) vorstehenden Zapfen (13),
einen Gabelarm (11) einer der Gelenkgabeln (5, 6) mit einer Lagerbohrung (15), in der der Zapfen (13) gelagert ist,
eine Außenhülse (16), die innerhalb der Lagerbohrung (15) angeordnet ist und die an einer der Zapfenkreuzmitte (S) zugewandten Seite eine Stirnfläche aufweist,
eine Innenhülse (17), die innerhalb der Lagerbohrung (15) angeordnet ist und die an einer der Zapfenkreuzmitte (S) zugewandten Seite einen Ringabschnitt (25) aufweist, und
ein Axiallager (28), das zwischen der Stirnfläche (46) der Außenhülse (16) und dem Ringabschnitt (25) der Innenhülse (17) angeordnet ist, und das Wälzkörper (29) aufweist,
wobei die Außenhülse (16) an einer der Zapfenmitte (S) zugewandten Seite der Lagerbohrung (15) axial gegen den Gabelarm (11) abgestützt ist, **dadurch gekennzeichnet,**
**dass** jeweils zwischen dem Ringabschnitt (25) der Innenhülse (17) und dem Zapfenkreuz (14) ein Spalt (27) vorgesehen ist, und
**dass** die Wälzköper (29) des Axiallagers (28) derart angeordnet sind, dass sich in Richtung parallel zur Zapfenachse (Y) eine Überdeckung der Wälzkörper (29) mit dem Gabelarm (11) ergibt.

2. Kreuzgelenkanordnung nach Anspruch 1,
**dadurch gekennzeichnet,**
**dass** die Außenhülsen (16) jeweils einen Flanschabschnitt (20) aufweisen, mit dem die Außenhülsen (16) jeweils an der der Zapfenkreuzmitte (S) zugewandten Seite der Lagerbohrung (15) axial gegen den Gabelarm (11) abgestützt sind.

3. Kreuzgelenkanordnung nach Anspruch 2,
**dadurch gekennzeichnet,**
**dass** sich jeweils an der der Zapfenkreuzmitte (S) zugewandten Seite an die Lagerbohrung (15) ein Bohrungsabschnitt (21) mit gegenüber der Lagerbohrung (15) erweitertem Innendurchmesser anschließt, innerhalb dessen der Flanschabschnitt (20) angeordnet ist.

4. Kreuzgelenkanordnung nach einem der Ansprüche 2 oder 3,
**dadurch gekennzeichnet,**
**dass** die Außenhülsen (16) jeweils ausgehend vom Flanschabschnitt (20) einen Hülsenabschnitt (19) aufweisen, dessen Außendurchmesser an den Innendurchmesser der jeweiligen Lagerbohrung (15) angepasst ist.

5. Kreuzgelenkanordnung nach Anspruch 4,
**dadurch gekennzeichnet,**
**dass** innerhalb des Hülsenabschnitts (19) Wälzkörper (18) eines Radiallagers (43) angeordnet sind.

6. Kreuzgelenkanordnung nach einem der vorangehenden Ansprüche,
**dadurch gekennzeichnet,**
**dass** jeweils der Ringabschnitt (25) an einem hülsenförmigen Ausgleichsabschnitt (24) der Innenhülse (17) angeordnet ist, wobei zwischen dem Ausgleichsabschnitt (24) und dem Zapfenkreuz (14) ein Spalt (26) vorgesehen ist.

7. Kreuzgelenkanordnung nach einem der vorangehenden Ansprüche,
**dadurch gekennzeichnet,**
**dass** jeweils die Innenhülse (17) axial in Richtung zur Zapfenkreuzmitte (S) an einem Zapfenende (32) des Zapfens (13), das der Zapfenkreuzmitte (S) abgewandt ist, abgestützt ist.

8. Kreuzgelenkanordnung nach einem der vorangehenden Ansprüche,
**dadurch gekennzeichnet,**
**dass** die Axiallager (28) jeweils zumindest teilweise außerhalb eines Durchmessers der jeweiligen Lagerbohrung (15) angeordnet sind.

9. Kreuzgelenkanordnung nach einem der vorangehenden Ansprüche,
**dadurch gekennzeichnet,**
**dass** je Zapfen (13) eine Dichtungsanordnung (44) mit einem inneren Ring (38) und einem äußeren Ring (39) vorgesehen ist,
**dass** der innere Ring (38) an dem Zapfenkreuz (14) befestigt ist und dass der äußere Ring (39) an der Außenhülse (16) befestigt ist.

10. Kreuzgelenkanordnung nach Anspruch 9,
**dadurch gekennzeichnet,**
**dass** zwischen dem inneren Ring (38) und dem äußeren Ring (39) eine Dichtung (40), vorzugsweise eine Labyrinthdichtung und/oder ein Wellendichtring, vorgesehen ist.

11. Kreuzgelenkanordnung nach einem der Ansprüche 9 oder 10,
**dadurch gekennzeichnet,**
**dass** zwischen dem inneren Ring (38) und der Innenhülse (17) eine Dichtung (42), vorzugsweise ein O-Ring, vorgesehen ist.

12. Kreuzgelenkanordnung nach einem der Ansprüche 9 bis 11,
**dadurch gekennzeichnet,**
**dass** zwischen dem äußeren Ring (39) und der Innenhülse (17) eine Dichtung (41), vorzugsweise ein Wellendichtring, vorgesehen ist.

## Claims

1. Universal joint arrangement with two joint yokes (5, 6) and four journal bearing arrangements (12), wherein the journal bearing arrangements (12) respectively comprise the following:
a journal (13), projecting from a journal cross centre (S) along a journal axis (Y),
a yoke arm (11) of one of the joint yokes (5, 6) with a bearing bore (15), in which the journal (13) is supported,
an outer sleeve (16), which is arranged within the bearing bore (15) and which has at a side facing the journal cross centre (S) an end face,
an inner sleeve (17), which is arranged within the bearing bore (15) and which has at a side facing the journal cross centre (S) an annular portion (25), and
an axial bearing (28), which is arranged between the end face (46) of the outer sleeve (16) and the annular portion (25) of the inner sleeve (17) and has rolling members (29),
wherein the outer sleeve (16) is axially supported on the yoke arm (11) at a side of the bearing bore (15) facing the journal centre (S),
**characterised in**
**that** respectively between the annular portion (25) of the inner sleeve (17) and the cross (14) a gap (27) is provided, and
**that** the rolling members (29) of the axial bearing (28) are arranged such, that in a direction parallel to the journal axis (Y) an overlapping of the rolling members (29) with the yoke arm (11) is achieved.

2. Universal joint arrangement according to claim 1,
**characterised in**
**that** the outer sleeves (16) have respectively a flange portion (20), with which the outer sleeves (16) are respectively axially supported on the yoke arm (11) at the side of the bearing bore (15) facing the journal cross centre (S).

3. Universal joint arrangement according to claim 2,
**characterised in**
**that** respectively at the side facing the journal cross centre (S) the bearing bore (15) is followed by a bore portion (21) with an inner diameter, which is enlarged in relation to the bearing bore (15) and in which the flange portion (20) is arranged.

4. Universal joint arrangement according to one of claims 2 or 3,
**characterised in**
**that** the outer sleeves (16) have respectively starting from the flange portion (20) a sleeve portion (19), which outer diameter is adapted to the inner diameter of the respective bearing bore (15).

5. Universal joint arrangement according to claim 4,
**characterised in**
**that** rolling members (18) of a radial bearing (43) are arranged within the sleeve portion (19).

6. Universal joint arrangement according to one of the preceding claims,
**characterised in**
**that** respectively the annular portion (25) is arranged on a sleeve-like compensation portion (24) of the inner sleeve (17), wherein between the compensation portion (24) and the cross (14) a gap (26) is provided.

7. Universal joint arrangement according to one of the preceding claims,
**characterised in**
**that** respectively the inner sleeve (17) is supported axially in direction to the journal cross centre (S) on a journal end (32) of the journal (13), which is facing away from the journal cross centre (S).

8. Universal joint arrangement according to one of the preceding claims,
**characterised in**
**that** the axial bearings (28) are respectively arranged at least partially outside of a diameter of the respective bearing bore (15).

9. Universal joint arrangement according to one of the preceding claims,
**characterised in**
**that** for each journal (13) a sealing arrangement (44) with an inner ring (38) and an outer ring (39) is provided,
**that** the inner ring (38) is mounted on the cross (14) and
**that** the outer ring (39) is mounted on the outer sleeve (16).

10. Universal joint arrangement according to claim 9,
**characterised in**
**that** between the inner ring (38) and the outer ring (39) a seal (40), preferably a labyrinth seal and/or radial seal ring, is provided.

11. Universal joint arrangement according to one of claims 9 or 10,
**characterised in**
**that** between the inner ring (38) and the inner sleeve (17) a seal (42), preferably an O-ring, is provided.

12. Universal joint arrangement according to one of claims 9 to 11,
**characterised in**
**that** between the outer ring (39) and the inner sleeve (17) a seal (41), preferably a radial seal ring, is provided.

## Revendications

1. Ensemble de joint universel comportant deux fourches d'articulation (5, 6) et quatre systèmes supports de tenon (12), les systèmes supports de tenon (12) comprenant respectivement les éléments suivants :
un tenon (13) dépassant d'un centre de croisillon de tenon (S) le long d'un axe de tenon (Y),
un bras de fourche (11) d'une des fourches d'articulation (5, 6) avec un alésage d'appui (15) dans lequel s'appuie le tenon (13),
une douille extérieure (16) qui est disposée dans l'alésage d'appui (15) et qui présente une surface frontale sur une face tournée vers le centre de croisillon de tenon (S),
une douille intérieure (17) qui est disposée dans l'alésage d'appui (15) et qui présente une section annulaire (25) sur une face tournée vers le centre de croisillon de tenon (S) et
un palier axial (28) qui est disposé entre la surface frontale (46) de la douille extérieure (16) et la section annulaire (25) de la douille intérieure (17) et qui présente le corps de roulement (29),
la douille extérieure (16) s'appuyant axialement contre le bras de fourche (11) sur une face tournée vers le centre du tenon (S) de l'alésage d'appui (15),
**caractérisé en ce**
**qu'**une fente (27) est prévue respectivement entre la section annulaire (25) de la douille intérieure (17) et le croisillon de tenon (14) et
**que** les corps de roulement (29) du palier axial (28) sont disposés de manière à obtenir, dans le sens parallèle à l'axe du tenon (Y), un recouvrement des corps de roulement (29) par le bras de fourche (11).

2. Système de joint universel selon la revendication 1, **caractérisé en ce que** les douilles extérieures (16) présentent respectivement une section de bride (20) par laquelle les douilles extérieures (16) sont respectivement soutenues axialement contre le bras de fourche (11) au niveau de la face tournée vers le centre du croisillon de tenon (S) de l'alésage d'appui (15).

3. Système de joint universel selon la revendication 2, **caractérisé en ce qu'**une section d'alésage (21) d'un diamètre intérieur élargi par rapport à l'alésage d'appui (15) et à l'intérieur de laquelle la section de bride (20) est disposée se raccorde respectivement à l'alésage d'appui (15) au niveau de la face tournée vers le centre de croisillon de tenon (S).

4. Système de joint universel selon une des revendications 2 ou 3, **caractérisé en ce que** les douilles extérieures (16) présentent respectivement, en partant de la section de bride (20), une section de douille (19) dont le diamètre extérieur est adapté au diamètre intérieur de l'alésage d'appui respectif (15).

5. Système de joint universel selon la revendication 4, **caractérisé en ce que** à l'intérieur de la section de douille (19), sont disposés des corps de roulement (18) d'un palier radial (43).

6. Système de joint universel selon une des revendications précédentes, **caractérisé en ce que** la section annulaire (25) est disposée respectivement au niveau d'une section de compensation en forme de douille (24) de la douille intérieure (17), une fente (26) étant prévue entre la section de compensation (24) et le croisillon de tenon (14).

7. Système de joint universel selon une des revendications précédentes, **caractérisé en ce que** la douille intérieure (17) s'appuie respectivement axialement en direction du centre du croisillon de tenon (S) à une extrémité de tenon (32) détournée du centre du croisillon de tenon (S) du tenon (13).

8. Système de joint universel selon une des revendications précédentes, **caractérisé en ce que** les paliers axiaux (28) sont disposés respectivement du moins partiellement à l'extérieur d'un diamètre de l'alésage d'appui respectif (15).

9. Système de joint universel selon une des revendications précédentes,
**caractérisé en ce**
**qu'**il est prévu pour chaque tenon (13) un système de joint (44) avec un anneau intérieur (38) est un anneau extérieur (39),
**que** l'anneau intérieur (38) est fixé au croisillon de tenon (14) et
**que** l'anneau extérieur (39) est fixé à la douille extérieure (16).

10. Système de joint universel selon la revendication 9, **caractérisé en ce que** entre l'anneau intérieur (38) et l'anneau extérieur (39), il est prévu un joint (40), de préférence un joint labyrinthe et/ou une bague d'étanchéité d'arbre.

11. Système de joint universel selon une des revendications 9 ou 10, **caractérisé en ce que** entre l'anneau intérieur (38) et l'anneau intérieur (17), il est prévu un joint (42), de préférence un joint torique.

12. Système de joint universel selon une des revendications 9 à 11, **caractérisé en ce que** entre l'anneau extérieur (39) et la douille intérieure (17), il est prévu un joint (41), de préférence une bague d'étanchéité d'arbre.
